# EUROPEAN PATENT SPECIFICATION

(11) **EP 0 653 391 B1**
(45) Date of publication and mention of the grant of the patent: **04.03.1998**
(21) Application number: 94117853.5
(22) Date of filing: 11.11.1994
(51) Int. Cl.: C04B 35/571, D01F 9/10

(54) **Process for producing silicon carbide fibers**
Verfahren zur Herstellung von Siliciumcarbidfasern
Procédé de préparation de fibres en carbure de silicium

(30) Priority: 17.11.1993 JP 309675/93
(43) Date of publication of application: 17.05.1995
(73) Proprietor: NIPPON CARBON CO., LTD., Tokyo (JP)
(72) Inventor: Ichikawa, Hiroshi, Yokohama-shi, Kanagawa (JP); Imai, Yoshikazu, Tokyo (JP); Takeda, Michio, Yamato-shi, Kanagawa (JP); Sakamoto, Junichi, Yokohama-shi, Kanagawa (JP)
(74) Representative: Grünecker, Kinkeldey, Stockmair & Schwanhäusser Anwaltssozietät

(56) References cited:
- DE-A- 3 809 614
- DATABASE WPI Section Ch, Week 7842 Derwent Publications Ltd., London, GB; Class A35, AN 78-74975A & JP-A-53 103 025 (TOKUSHU MUKI ZAIRYO) , 7 September 1978
- JOURNAL OF MATERIALS RESEARCH, vol. 7, no.1, 1 February 1992 pages 164-169, S-J. TING & J.D. MACKENZIE 'Spectroscopic studies of the structure of amorphous and microcrystalline SiC prepared by the polymer rout.'
- DATABASE WPI Section Ch, Week 7739 Derwent Publications Ltd., London, GB; Class A35, AN 77-69923Y & JP-A-52 099 319 (KANEBO KK) , 20 August 1977

## Description

### BACKGROUND OF THE INVENTION

### 1. Field of the Invention

The present invention relates to a process for producing silicon carbide fibers and more particularly to a process for producing silicon carbide fibers having excellent resistance to oxidation, high strength and high elastic modulus as well as desirable wettability with various metallic base materials, in which a hydrogen gas or dilute hydrogen gas atmosphere is employed as the baking atmosphere within at least a part of the temperature range in the baking step.

### 2. Prior Art

Silicon carbide fibers have conventionally been produced by spinning polycarbosilane or the like to obtain precursory fibers, rendering infusible the precursory fibers under given conditions, and then baking the infusible precursory fibers in the atmosphere of an inert gas such as nitrogen gas by raising the temperature of the atmosphere.

Although the silicon carbide fibers produced by the above conventional process have a certain measure of high strength and elastic modulus, they are low particularly in modulus as compared with a silicon carbide having a stoichiometric composition. Further, they are unsatisfactory in resistance to oxidation because of their relatively high content of free carbon besides silicon carbide. Thus, the above conventional silicon carbide fibers have a drawback that their uses at high temperatures are restricted. Further, they have another drawback that their wettability with various metallic base materials are poor because of their relatively high content of free carbon, thereby to raise a problem that a composite material made of said fibers and metallic materials will be poor in adhesion therebetween.

From DE-A-3809614 a process for producing ceramics material based on silicon carbide and/or silicon nitride is disclosed. The process is carried out in a pure hydrogen atmosphere. If H₂ gas is employed at temperatures exceeding 950°C the amount of silicon in the fibres becomes contrarily more than that of carbon. This results in the deterioration in oxidation resistance at high temperatures of the SiC fibers, lowered strength and elastic modulus.

JP-A-53103025 discloses a method for producing silicon carbide fibres by spinning an organic silicon polymer solution into fibres, then making infusible, preheating and burning the fibres. There is no H₂ gas used in the baking step and no switching from H₂ gas to an inert gas at about 950°C is suggested. A baking performed in a inert gas results in SiC-fibers which contain free carbon and have a higher C/Si ratio. Those fibres are lower in strength and elastic modulus.

From JP-A-52099319 a process is known which comprises a spinning and rendering infusible step. The precursory fibres are heated at more than 900°C in vacuum or in a gas containing hydrogen, methane, helium and argon. When the baking of the SiC filaments is performed in H₂ gas at temperatures of not lower than 900 -1100°C a decarbonisation reaction scarcely occurs so that a large amount of free carbon remains in the resultant filaments. Thus produced filaments are inferior in strength and elastic modulus.

In recent years, silicon carbide fibers are expected as a material for use in forming various members of a high-temperature gas turbine. However, it is true at present that the conventional silicon carbide fibers still cannot be brought into practical use because of the above drawbacks.

### Summary of the Invention

An object of the present invention is to eliminate the above drawbacks of the prior art and provide a process for producing silicon carbide fibers having not only high strength and elastic modulus but also excellent resistance to oxidation at high temperatures and wettability with various metallic base materials.

The inventors made extensive and intensive studies with a view to attaining the above object. As a result, they have found that the above object can be attained by employing a hydrogen gas or dilute hydrogen gas atmosphere as the baking atmosphere during at least a part of the temperature range in the baking step. The present invention is based on the above finding.

The present invention resides in a process for producing silicon carbide fibers, comprising the steps of spinning an organosilicon high-molecular compound to obtain precursory fibers, rendering infusible the precursory fibers to obtain infusible fibers, and then baking (firing) the infusible fibers thereby to obtain silicon carbide fibers, the process being characterized in that
(A) at temperatures not higher than 950°C, the baking is carried out in an atmosphere selected from the group consisting of a hydrogen gas atmosphere, a dilute hydrogen gas atmosphere and an inert gas atmosphere, with the proviso that the baking at temperatures within at least a part of a temperature range from 500 to 950°C is carried out in a hydrogen gas or dilute hydrogen gas atmosphere and
(B) at temperatures higher than 950°C, the baking is carried out in an inert gas atmosphere.

The process of the present invention will now be described below in greater detail.

In the process of the present invention, precursory fibers obtained by spinning an organosilicon high-molecular compound are used. The organosilicon high-molecular compounds used as the starting materials include polycarbosilane, polysilazane and polysiloxane. Further, the above organosilicon high-molecular compounds may be those comprising carbon, silicon, oxygen and nitrogen together with a metallic element such as boron, titanium, zirconium and/or aluminum. Polycarbosilane fibers are generally employed as the precursory fibers for the silicon carbide fibers.

The above organosilicon high-molecular compound is formed into fibers according to a spinning technique, such as a melt or dry spinning technique to obtain precursory fibers which are subsequently rendered infusible. Methods for rendering the precursory fibers infusible may be conventional ones such as one in which a chemical reaction with oxygen, an oxide, an unsaturated hydrocarbon compound or the like is utilized, or one in which a crosslinking reaction is effected by the use of radiation such as electron beams or ultraviolet rays. Conditions for rendering the fibers infusible, such as atmosphere, temperature, time and actual procedure, may appropriately be selected depending on the employed method of rendering the fibers infusible.

The fibers thus rendered infusible are then baked by raising the temperature of the atmosphere under the following conditions, thereby to obtain silicon carbide fibers accoring to this invention.

In the process of the present invention, the above baking under the rising temperature condition is performed in the atmosphere of a gas selected from the group consisting of hydrogen gas, a dilute hydrogen gas and an inert gas, with the proviso that the baking within at least a part of the temperature range of from 500 to 950 °C, preferably from 650 to 850 °C should be carried out in a hydrogen gas or dilute hydrogen gas atmosphere. The employment of a reducing atmosphere of hydrogen gas or dilute hydrogen gas as the baking atmosphere at any temperature within at least a part of the specified temperature range in the baking step advances the pyrolysis and decarbonization of the precursory fibers and ensures control of the chemical composition of the resultant silicon carbide fibers, i.e., restriction of the amount of free carbon generated.

Although a hydrogen gas or dilute hydrogen gas atmosphere may be used in the process of the present invention, the atmosphere of purified hydrogen gas is preferred. The term "dilute hydrogen gas atmosphere" used herein means an atmosphere of hydrogen gas diluted with an inert gas such as nitrogen, argon or helium, and a hydrogen gas content of the dilute hydrogen gas atmosphere is at least 10% by volume. Although the use of ammonia gas also induces a decarbonization reaction simultaneously with causing nitridation of the precursory fibers with the result that the resultant silicon carbide fibers will have insufficient mechanical properties and heat resistance.

In the process of the present invention, although an inert gas atmosphere as well as the above-mentioned hydrogen gas or dilute hydrogen gas atmosphere may be used as the baking atmosphere, the baking may be performed entirely in a hydrogen gas or dilute hydrogen gas atmosphere. The inert gases suitable for use in the present invention include nitrogen, argon and helium gases.

In the present invention, there is no particular limitation as long as a hydrogen gas or dilute hydrogen gas atmosphere at any temperature within at least a part of a temperature range of 500 - 950 °C, preferably 650 - 850 °C, is used as one of the baking atmospheres in the step of baking the infusible fibers.

In other words, among the use of each of gaseous atmospheres which are a hydrogen gas atmosphere, a dilute hydrogen gas atmosphere and an inert gas atmosphere, in which atmospheres the infusible fibers are baked, the use of the hydrogen gas or dilute hydrogen gas atmosphere at any temperature in at least a part of a temperature range of 500 - 950 °C, preferably 650 - 850 °C, should be included in the baking step. Thus, the baking within the temperature range from 500 to 950 °C should not be carried out entirely in an inert gas atmosphere in the process of the present invention. This is because, when the baking within the above-specified temperature range is carried out entirely in an inert gas atmosphere, decarbonization reaction does not occur thereby to cause a large amount of free carbon to remain in the resultant silicon carbide fibers.

The baking atmosphere used between a temperature at which the baking starts and a temperature of lower than 500 °C as well as between a temperature of higher than 950 °C and a temperature at which the baking ends, may be any one selected from the group consisting of a hydrogen gas atmosphere, a dilute hydrogen gas atmosphere and an inert gas atmosphere, and, however, the inert gas atmosphere is preferred for use at temperatures outside the range of 500 to 950 °C because decarbonization occurs only to a slight extent outside the range and because of economic reasons.

In the baking step of the process of the present invention, particular conditions such as the time and temperature range for holding the infusible fibers in a hydrogen gas or dilute hydrogen gas atmosphere may be appropriately selected so that the C/Si molar ratio of the resultant silicon carbide fibers is from 0.80 to 1.35, more preferably 1.10 or less and most preferably 1.05 or less, depending on the amount of infusible fibers fed, the concentration of hydrogen gas used and other factors.

Although there is no particular limitation on the actual atmosphere-changing over operation conducted in the baking step of the process of the present invention only if the above requirements are met, a preferred mode of the above operation will now be described in detail.

First, the baking of the above-mentioned infusible fibers is started in a hydrogen gas, dilute hydrogen gas or inert gas atmosphere under the rising temperature condition. When the baking is started in an inert gas atmosphere, the baking atmosphere is changed over from the inert gas to hydrogen gas or a dilute hydrogen gas at a temperature of not higher than 950 °C. In a case where this changeover is carried out at a temperature of higher than 950 °C, the decarbonization reaction occurs only to a very limited extent thereby to cause a large amount of free carbon to remain in the resultant silicon carbide fibers. The above changeover to hydrogen gas or a dilute hydrogen gas is conducted at a temperature of preferably 450 to 650 °C, more preferably 450 to 550 °C.

The above baking in a hydrogen gas or dilute hydrogen gas atmosphere is continued under the rising temperature condition, and at temperatures higher than 950°C the baking atmosphere is changed over from the hydrogen gas or dilute hydrogen gas to an inert gas. It is requisite to conduct the changeover to the inert gas atmosphere at a temperature of not lower than 500 °C. This changeover is conducted preferably at a temperature from 650 to 950°C more preferably at 700 to 950 °C. In a case where this changeover is carried out at a temperature of lower than 500 °C, the decarbonization reaction occurs only to a very limited extent thereby to cause a large amount of free carbon to remain in the resultant silicon carbide fibers.

In the above inert gas the baking temperature is raised to the highest temperature of preferably 1200 to 2000 °C, which is further maintained as required to complete the baking. Baking conditions such as baking time and temperature-raising rate in the baking step are not particularly limited and suitably selected from among the conventional conditions. The temperature-raising rate is preferably in the range of 10 to 1000 °C/hr.

Silicon carbide fibers having not only high strength and elastic modulus but also excellent resistance to oxidation at high temperatures and wettability with various metallic base materials can be obtained by the employment of a hydrogen gas or dilute hydrogen gas atmosphere as the baking atmosphere at temperatures within at least a part of the specified temperature range in the baking step. In the baking step of the process of the present invention, boron may be added to the baking atmosphere. The added boron is converted to boron carbide, so that the resultant silicon carbide fibers have more improved resistance to oxidation.

### Brief Description of the Drawing

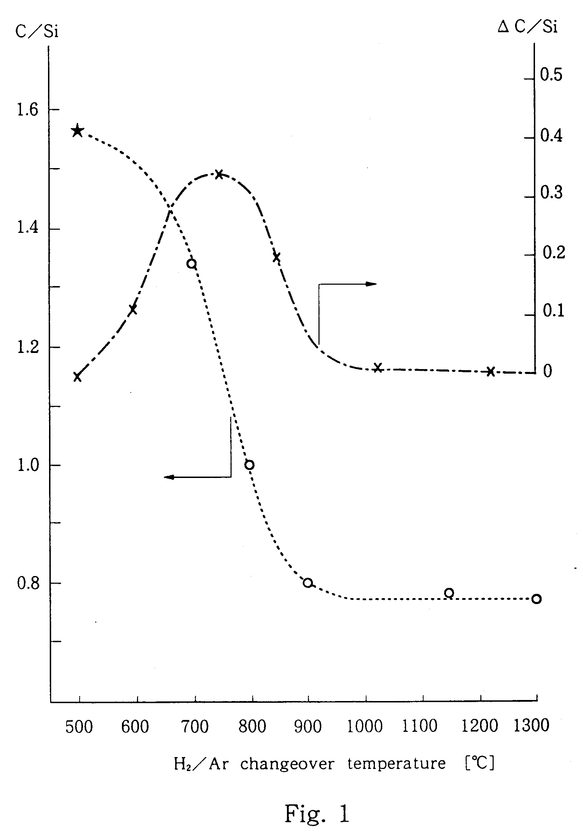

Fig. 1 is a graph showing the relationship between the C/Si molar ratio of the fibers baked and the temperature at which the baking atmosphere is changed over from H₂ gas to Ar gas, as well as the relationship between ΔC/Si which means decarbonization reactivity and the above temperature.

### Description of the Preferred Embodiments

The present invention will be described below in greater detail with reference to the following Examples.

### Examples 1 to 11 and Comparative Examples 1 to 4

Each of the organosilicon high-molecular compounds specified in Table 1 was melt spun to obtain precursory fibers having a diameter of 20 µm. The organosilicon high-molecular compounds used were indicated below.

### (Polycarbosilane)

Average molecular weight: about 2000
Basic skeleton:

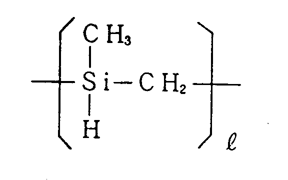

### (Polytitanocarbosilane)

Average molecular weight: about 3000
Basic skeleton:

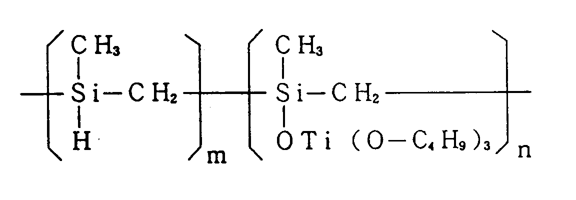

In the above basic skeletons, ℓ, m and n represent integers, respectively.

The above precursory fibers were rendered infusible by the respective methods specified in Table 1 to obtain infusible fibers. The conditions under which the precursory fibers were rendered infusible were as follows:

### (Rendering the fibers infusible by electron beams)

Atmosphere: He
Electron beam acceleration voltage: 2 MeV
Electron beam current: 3 mA
Irradiation time: 10 hr

### (Rendering the fibers infusible by acetylene-ultraviolet rays)

Atmosphere: 50% N₂ + 50% C₂H₂
Wavelength of ultraviolet rays: 365 nm and 435 nm
Irradiation time: 8 hr

### (Rendering the fibers infusible by O₂)

Atmosphere: air
Temperature-raising rate: 10 °C/hr
Highest temperature: 200 °C

The above infusible fibers were baked by raising the temperature thereof to 1300 °C under the respective conditions specified in Table 1 thereby to obtain silicon carbide fibers. The baking temperature was raised at a rate of 100 °C/hr.

The C/Si molar ratio, tensile strength and tensile elastic modulus of the obtained silicon carbide fibers are shown in Table 2.

The relationship between the C/Si and the temperature at which the baking atmosphere was changed over from H₂ gas to Ar gas, as well as the relationship between ΔC/Si and the above temperature, was determined from the results of Examples 1 to 5 and Comparative Example 1, as shown in Fig. 1.

**Table 1**

| Example Comp.Ex. | Starting material | Spinning manner | Method for rendering fibers infusible | Baking temperature and baking atmosphere |
|---|---|---|---|---|
| Comp.Ex. 1 | Polycarbosilane | Melt spinning | Electron beam | Room temp.- 1300°C Ar gas |
| Example 1 | Polycarbosilane | Melt spinning | Electron beam | Room temp.- 500°C N₂ gas |
| | | | | 500 - 700°C H₂ gas |
| | | | | 700 - 1300°C Ar gas |
| Example 2 | Polycarbosilane | Melt spinning | Electron beam | Room temp.- 500°C N₂ gas |
| | | | | 500 - 800°C H₂ gas |
| | | | | 800 - 1300°C Ar gas |
| Example 3 | Polycarbosilane | Melt spinning | Electron beam | Room temp.- 500°C N₂ gas |
| | | | | 500 - 900°C H₂ gas |
| | | | | 900 - 1300°C Ar gas |
| Comp.Example 5 | Polycarbosilane | Melt spinning | Electron beam | Room temp.- 500°C N₂ gas |
| | | | | 500 - 1150°C H₂ gas |
| | | | | 1150 - 1300°C Ar gas |
| Comp.Example 6 | Polycarbosilane | Melt spinning | Electron beam | Room temp.- 500°C N₂ gas |
| | | | | 500 - 1300°C H₂ gas |
| Example 6 | Polycarbosilane | Melt spinning | Electron beam | Room temp.- 800°C H₂ gas |
| | | | | 800 - 1300°C Ar gas |
| Example 7 | Polycarbosilane | Melt spinning | Electron beam | Room temp.- 500°C N₂ gas |
| | | | | 500 - 800°C H₂ gas |
| | | | | 800 - 1300°C N₂ gas |
| Example 8 | Polycarbosilane | Melt spinning | Electron beam | Room temp.- 800°C H₂ gas 50% + Ar gas 50% |
| | | | | 800 - 1300°C Ar gas |
| Example 9 | Polycarbosilane | Melt spinning | Acetylene-ultraviolet ray | Room temp.- 500°C N₂ gas |
| | | | | 500 - 800°C H₂ gas |
| | | | | 800 - 1300°C Ar gas |
| Comp.Ex. 2 | Polycarbosilane | Melt spinning | Acetylene-ultraviolet ray | Room temp.- 1300°C Ar gas |
| Example 10 | Polycarbosilane | Melt spinning | O₂ | Room temp.- 500°C N₂ gas |
| | | | | 500 - 800°C H₂ gas |
| | | | | 800 - 1300°C Ar gas |
| Comp.Ex. 3 | Polycarbosilane | Melt spinning | O₂ | Room temp.- 1300°C Ar gas |
| Example 11 | Polytitanocarbosilane | Melt spinning | Electron beam | Room temp.- 500°C N₂ gas |
| | | | | 500 - 700°C H₂ gas |
| | | | | 700 - 1300°C Ar gas |
| Comp.Ex. 4 | Polytitanocarbosilane | Melt spinning | Electron beam | Room temp.- 1300°C Ar gas |

**Table 2**

| Example Comp.Ex. | C/Si | Tensile strength (Kgf/mm²) | Tensile elastic modulus (tonf/mm²) |
|---|---|---|---|
| Comp.Ex. 1 | 1.56 | 321 | 24.5 |
| Example 1 | 1.34 | 362 | 29.0 |
| Example 2 | 1.00 | 415 | 37.4 |
| Example 3 | 0.80 | 343 | 33.6 |
| Comp.Example 5 | 0.78 | 285 | 30.3 |
| Comp.Example 6 | 0.77 | 265 | 28.4 |
| Example 6 | 1.02 | 413 | 37.1 |
| Example 7 | 1.05 | 320 | 26.5 |
| Example 8 | 1.08 | 360 | 32.4 |
| Example 9 | 1.12 | 360 | 31.2 |
| Comp.Ex. 2 | 1.65 | 326 | 22.7 |
| Example 10 | 0.95 | 283 | 18.5 |
| Comp.Ex. 3 | 1.38 | 274 | 17.9 |
| Example 11 | 1.13 | 365 | 30.1 |
| Comp.Ex. 4 | 1.60 | 330 | 16.8 |

As is apparent from the results indicated in Table 2, the C/Si values of the silicon carbide fibers of Examples 1-3 and 6-11 produced according to the process of the present invention are low as compared with those of the silicon carbide fibers of Comparative Examples 1 to 6 according to the process of the prior art, and, therefore, the silicon carbide fibers according to the present invention are composed mainly of β-SiC and contain only a small amount or none of free carbon. Therefore, the silicon carbide fibers according to the present invention exhibit high oxidation resistance and excellent wettability with various metallic base materials. By contrast, the silicon carbide fibers of Comparative Examples 1 to 4 are each composed of β-SiC plus C, thus having a high content of free carbon, whereby not only are their resistance to oxidation unsatisfactory but also their wettability with various metallic base materials are poor.

Further, it has been found from the results shown in Fig. 1 that the temperature range in which the decarbonization reaction proceeds in a hydrogen gas atmosphere is principally a range of 500 to 950 °C, and that the temperature range in which the decarbonization reaction especially vigorously advances is a range of 650 to 850 °C.

The silicon carbide fibers of Examples 1-3 and 6-8 had the same high tensile strength as that of the silicon carbide fibers of Comparative Example 1 according to the process of the prior art. In particular, the tensile strengths of the silicon carbide fibers of Examples 1 to 3, 6 and 8 were higher, and especially the tensile strengths of the silicon carbide fibers of Examples 2 and 6 were much higher, than that of the silicon carbide fibers of Comparative Example 1. Moreover, the tensile elastic moduli of the silicon carbide fibers of Examples 1-3 and 6-8 were all higher, and especially the tensile elastic moduli of the silicon carbide fibers of Examples 2 and 6 were much higher, than that of the silicon carbide fibers of Comparative Example 1.

The silicon carbide fibers of Examples 9 to 11 which are different from those of Examples 1-3 and 6-8 in respect of the employed method for rendering the fibers infusible and the starting material used, also exhibited tensile strength and tensile elastic modulus higher than those of the silicon carbide fibers of Comparative Examples 2 to 4 which were produced in the same manner as in Examples 9 to 11 except that only an inert gas atmosphere was employed as the baking atmosphere.

### Experimental Test 1 (heat resistance test)

The silicon carbide fibers obtained in Examples 1 to 3, 6 and 7 and Comparative Example 1 were individually kept at 1500 °C in an argon gas atmosphere for 10 hr to evaluate the heat resistance properties thereof. The tensile strength and tensile elastic modulus of the tested silicon carbide fibers of each Example after the above heat resistance test are shown in Table 3.

### Experimental Test 2 (oxidation resistance test)

The silicon carbide fibers obtained in Examples 1 to 3, 6 and 7 and Comparative Example 1 were individually exposed to air at 1300 °C for 10 hr to evaluate the oxidation resistance properties thereof. The tensile strength and tensile elastic modulus of the tested silicon carbide fibers of each Example after the above oxidation resistance test are shown in Table 3.

**Table 3**

| Example Comp.Ex. | After heat resistance test | | After oxidation resistance test | |
|---|---|---|---|---|
| | Tensile strength (Kgf/mm²) | Tensile elastic modulus (tonf/mm²) | Tensile strength (Kgf/mm²) | Tensile elastic modulus (tonf/mm²) |
| Comp.Ex. 1 | 243 | 26.2 | 135 | 22.4 |
| Example 1 | 320 | 28.3 | 192 | 25.3 |
| Example 2 | 392 | 37.2 | 295 | 36.1 |
| Example 3 | 240 | 31.5 | 261 | 29.1 |
| Example 6 | 380 | 37.5 | 291 | 35.2 |
| Example 7 | 302 | 26.1 | 270 | 24.3 |

In the heat resistance test, the silicon carbide fibers obtained in each of Examples 1 to 3, 6 and 7 and Comparative Example 1 were no changed in appearance and flexible even after having been heated at 1500 °C. As is apparent from the results indicated in Table 3, the silicon carbide fibers of Examples 1 to 3, 6 and 7, especially those of Examples 1, 2, 6 and 7 according to the process of the present invention, even after having been heated at 1500 °C, maintained high tensile strength and tensile elastic modulus which were comparable or superior to those of the silicon carbide fibers of Comparative Example 1. In particular, the silicon carbide fibers of Examples 2 and 6 exhibited extremely high tensile strength and tensile elastic modulus even after having been heated at 1500 °C.

Therefore, it has been demonstrated that the silicon carbide fibers produced according to the process of the present invention can be practically used even at about 1500 °C.

In the oxidation resistance test, as is apparent from the results indicated in Table 3, the silicon carbide fibers of Examples 1 to 3, 6 and 7, especially those of Examples 2, 3, 6 and 7 according to the process of the present invention, even after having been heated at 1300 °C in air, maintained high tensile strength and tensile elastic modulus which were superior to those of the silicon carbide fibers of Comparative Example 1. Therefore, it has been demonstrated that the silicon carbide fibers produced according to the process of the present invention can satisfactorily be endurable for use even in air at temperatures as high as about 1300 °C.

As described above, silicon carbide fibers having high strength and elastic modulus and excellent resistance to oxidation at high temperatures can be obtained by the process of the present invention. Moreover, the process of the present invention permits regulating the C/Si molar ratio of to-be-obtained silicon carbide fibers so as to fall in the range of 1.34 to 0.77, thereby rendering it possible to produce silicon carbide fibers having excellent wettability with various metallic base materials.

## Claims

1. A process for producing silicon carbide fibers having a C/Si ratio of from 0.80 to 1.35, comprising the steps of spinning an organosilicon high-molecular compound to obtain precursory fibers, rendering infusible the precursory fibers to obtain infusible fibers and baking the infusible fibers thereby to obtain the silicon carbide fibers, characterized in that:
(A) at temperatures not higher than 950°C, the baking is carried out in an atmosphere selected from the group consisting of a hydrogen gas atmosphere, a dilute hydrogen gas atmosphere and an inert gas atmosphere, with the proviso that the baking at temperatures within at least a part of a temperature range from 500 to 950°C is carried out in a hydrogen gas or dilute hydrogen gas atmosphere and
(B) at temperatures higher than 950°C, the baking is carried out in an inert gas atmosphere.

2. The process according to claim 1, wherein said temperature range in step (A) is from 650 to 850°C.

3. The process according to calim 1 or 2, wherein said dilute hydrogen gas atmosphere in step (A) contains at least 10% by volume of hydrogen gas.

4. The process according to any one of claims 1 to 3, wherein said organosilicon high-molecular compound is polycarbosilane of average molecular weight about 2000 or polytitanocarbosilane of average molecular weight about 3000.

5. The process according to any one of claims 1 to 4, wherein the baking is started at room temperature.

6. The process according to any one of claims 1 to 5, wherein the baking is terminated at the highest temperature of 1200 to 2000°C.

7. The process accordig to any one of claims 1 to 6, wherein the baking temperature is raised at a rate of from 10 to 1000°C/hr.

## Patentansprüche

1. Verfahren zur Herstellung von Siliciumcarbidfasern mit einem C/Si-Verhältnis von 0,8 bis 1,35, umfassend die Schritte des Spinnens einer hochmolekularen Organosilicium-Verbindung zum Erhalt von Vorläuferfasern, das Unschmelzbarmachen der Vorläuferfasern zum Erhalt unschmelzbarer Fasern und die Wärmebehandlung der unschmelzbaren Fasern, um dadurch Siliciumcarbidfasern zu erhalten, **dadurch gekennzeichnet,** daß:
(A) bei Temperaturen nicht oberhalb von 950°C die Wärmebehandlung in einer Atmosphäre durchgeführt wird, ausgewählt aus der Gruppe, bestehend aus einer Wasserstoffgasatmosphäre, einer verdünnten Wasserstoffgasatmosphäre und einer inerten Gasatmosphäre, mit der Maßgabe, daß die Wärmebehandlung bei Temperaturen innerhalb mindestens eines Teils des Temperaturbereichs von 500 bis 950°C in einer Wasserstoffgas- oder einer verdünnten Wasserstoffgasatmosphäre durchgeführt wird und
(B) bei Temperaturen oberhalb von 950°C die Wärmebehandlung in einer inerten Gasatmosphäre durchgeführt wird.

2. Verfahren nach Anspruch 1, wobei der Temperaturbereich in Schritt (A) bei 650 bis 850°C liegt.

3. Verfahren nach Anspruch 1 oder 2, wobei die verdünnte Wasserstoffgasatmosphäre in Schritt (A) mindestens 10 Vol.-% Wasserstoffgas enthält.

4. Verfahren nach einem oder mehreren der Ansprüche 1 bis 3, wobei die hochmolekulare Organosiliciumverbindung ein Polycarbosilan mit einem durchschnittlichen Molekulargewicht von ungefähr 2000 oder Polytitanocarbosilan mit einem durchschnittlichen Molekulargewicht von ungefähr 3000 ist.

5. Verfahren nach einem oder mehreren der Ansprüche 1 bis 4, wobei die Wärmebehandlung bei Raumtemperatur begonnen wird.

6. Verfahren nach einem oder mehreren der Ansprüche 1 bis 5, wobei die Wärmebehandlung bei der höchsten Temperatur von 1200 bis 2000°C beendet wird.

7. Verfahren nach einem oder mehreren der Ansprüche 1 bis 6, wobei die Wärmebehandlungstemperatur mit einer Geschwindigkeit von 10 bis 1000°C pro Stunde angehoben wird.

## Revendications

1. Procédé de fabrication de fibres de carbure de silicium ayant un rapport de C/Si de 0,80 à 1,35, comprenant les étapes consistant à filer un composé organosilicié de poids moléculaire élevé pour obtenir des fibres précurseurs, rendre ces fibres précurseurs infusibles pour obtenir des fibres infusibles et cuire les fibres infusibles de façon à obtenir ainsi des fibres de carbure de silicium, caractérisé en ce que :
(A) à des températures ne dépassant pas 950°C, on effectue la cuisson dans une atmosphère choisie dans l'ensemble constitué par une atmosphère de gaz hydrogène, une atmosphère de gaz hydrogène dilué et une atmosphère de gaz inerte, avec la condition que la cuisson à des températures situées au moins dans une partie de la plage de températures allant de 500 à 950°C soit effectuée dans une atmosphère de gaz hydrogène ou de gaz hydrogène dilué, et
(B) à des températures supérieures à 950°C, on effectue la cuisson dans une atmosphère de gaz inerte.

2. Procédé selon la revendication 1, dans lequel la plage de températures dans l'étape (A) est de 650 à 850°C.

3. Procédé selon la revendication 1 ou 2, dans lequel ladite atmosphère de gaz hydrogène dilué dans l'étape (A) contient au moins 10 % en volume de gaz hydrogène.

4. Procédé selon l'une quelconque des revendications 1 à 3, dans lequel ledit composé organosilicié de poids moléculaire élevé est un polycarbosilane ayant un poids moléculaire moyen d'environ 2000 ou un polytitanocarbosilane ayant un poids moléculaire moyen d'environ 3000.

5. Procédé selon l'une quelconque des revendications 1 à 4, dans lequel on démarre la cuisson à la température ambiante.

6. Procédé selon l'une quelconque des revendications 1 à 5, dans lequel on termine la cuisson à la température maximale de 1200 à 2000°C.

7. Procédé selon l'une quelconque des revendications 1 à 6, dans lequel on augmente la température de cuisson a une vitesse de 10 à 1000°C/h.
